# EUROPEAN PATENT SPECIFICATION

(11) **EP 3 903 551 B1**
(45) Date of publication and mention of the grant of the patent: **11.11.2026**
(21) Application number: 19901805.2
(22) Date of filing: 19.12.2019
(51) Int. Cl.: A01B 69/00

(54) **WORK VEHICLE, AND WORK MACHINERY EQUIPPED WITH WORK VEHICLE**
ARBEITSFAHRZEUG UND ARBEITSMASCHINE MIT EINEM ARBEITSFAHRZEUG
VÉHICULE DE TRAVAIL, ET ENGIN DE TRAVAIL ÉQUIPÉ DU VÉHICULE DE TRAVAIL

(30) Priority: 26.12.2018 JP 2018243531
(43) Date of publication of application: 03.11.2021
(73) Proprietor: KUBOTA CORPORATION, Osaka-shi, Osaka 530-0011 (JP)
(72) Inventor: KUROGI, Toshiaki, Sakai-shi, Osaka 590-0823 (JP)
(74) Representative: Bittner, Thomas L.
(86) International application number: PCT/JP2019/049845
(87) International publication number: WO 2020/137810

(56) References cited:
- JP-A- 2006 180 702
- JP-A- 2018 180 919
- JP-A- H01 223 084
- JP-A- S5 856 606
- JP-A- S62 289 472
- US-A1- 2006 142 936
- US-A1- 2017 188 505

## Description

### Technical field

The present invention relates to a working vehicle such as a tractor and to a working machine having the working vehicle, for example. A working vehicle and a working machine are known from US 2006/142936 A1.

### Background art

A technique disclosed in document JP 2018-116608 A is known as a technique for creating a traveling route (a scheduled traveling route) on which a working vehicle such as a tractor autonomously travels. In document JP 2018-116608 A, a traveling route creating unit generates an inner traveling route constituted of straight traveling routes and a U-turn route connecting the straight traveling routes, and a circuit traveling route for traveling around in an outer circumferential area of an agricultural field.

### Disclosure of the invention

### Problems to be solved by the invention

In document JP 2018-116608 A, a traveling vehicle can autonomously travel on a traveling route (a scheduled traveling route) created by the traveling route creating unit. However, it is difficult to perform autonomous traveling in a working machine including a traveling vehicle and a towed vehicle that is connected to the traveling vehicle and configured to be orientated oblique to the traveling vehicle.

In view of the above-mentioned problem, the present invention intends to provide a working vehicle and a working machine having the working vehicle, which are capable of easily performing autonomous traveling even when the traveling vehicle and a towed vehicle connected to the traveling vehicle are autonomously traveling on a scheduled traveling route.

### Means of solving the problems

Technical means of the present invention for solving this technical problem is characterized by the appended claims.

A working vehicle includes a traveling vehicle having a connector configured to connect a towed vehicle to the traveling vehicle, the traveling vehicle being configured to travel on a scheduled traveling route. The working vehicle further comprises an angle detector, which, when a towed vehicle is connected to the connector, is configured to detect a relative angle between the connector and the towed vehicle connected to the connector; a positioning device to detect a vehicle position which is a position of the traveling vehicle, and an autonomous traveling controller to control autonomous traveling of the traveling vehicle based on the relative angle, the scheduled traveling route, and the vehicle position, wherein the autonomous traveling controller controls steering of the traveling vehicle so that the vehicle position matches the scheduled traveling route, and determines at least one of a steering angle and a steering direction of the traveling vehicle based on the relative angle, wherein, when a towed vehicle is connected to the connector and when the scheduled traveling route includes a turn portion configured to make the traveling vehicle moving thereon turn, and the relative angle is less than a turn judgment value, the autonomous traveling controller executes a turn control to determine the steering angle and the steering direction so that the vehicle position matches the turn portion, and, in the turn control, when the relative angle be-comes the turn judgment value or more, the autonomous traveling controller stops the turn control.

After the stopping of the turn control, when the scheduled traveling route includes a straight-line portion continuously connecting to the turn portion, the straight-line portion being configured to make the traveling vehicle moving thereon travel straight, the autonomous traveling controller shifts to a multi-point turn control to turn the traveling vehicle in multi-point by changing either the steering angle or the steering direction so that the traveling vehicle enters the straight-line portion.

After the turn control or the multi-point turn control, the autonomous traveling controller determines the steering angle and the steering direction so that the towed vehicle is positioned on the straight-line portion.

A working machine includes the working vehicle mentioned above, and a towed vehicle connected to the working vehicle.

### Effects of the invention

According to the present invention, autonomous traveling can be easily performed on the scheduled traveling route even when the traveling vehicle and the towed vehicle connected to the traveling vehicle are to autonomously travel on the scheduled traveling route.

### Brief description of drawing

- FIG. 1: is a view showing a block diagram of a working vehicle having a traveling support device.
- FIG. 2: is a view showing a connector.
- FIG. 3: is a view explaining autonomous traveling.
- FIG. 4: is a view showing an example of a map register screen M1.
- FIG. 5A: is a view of acquiring a contour H1 of an agricultural field (a field map MP2) based on a traveling locus K1.
- FIG. 5B: is a view of acquiring the contour H1 of the agricultural field (the field map MP2) based on an inflection point of the traveling locus K1.
- FIG. 5C: is a view of acquiring the contour H1 (the field map MP2) based on switching operations in traveling.
- FIG. 6: is a view showing an example of a work setting screen M2.
- FIG. 7: is a view showing an example of a route setting screen M3.
- FIG. 8A: is a view showing a unit work section A3 created in a work area A2.
- FIG. 8B: is a view showing a unit work section A3 different from that of FIG. 8A.
- FIG. 9: is an explanation view explaining creation of a scheduled traveling route.
- FIG. 10A: is a view that shows traveling in a state where an extension member and a connecting bar are aligned in a straight line in a fore-and-aft direction.
- FIG. 10B: is a view that shows traveling in a state where the connecting bar is oblique relative to the extension member.
- FIG. 11A: is a view showing states of a working machine turning left and turning in multi-point.
- FIG. 11B: is a view showing states of the working machine turning right and turning in multi-point.
- FIG. 12A: is a view showing a state where a traveling vehicle and a towed vehicle travel straight with a configuration oblique in one direction.
- FIG. 12B: is a view showing a state where the traveling vehicle and the towed vehicle travel straight with a configuration oblique in the other direction.
- FIG. 13: is a view showing a flow of the autonomous traveling.
- FIG. 14: is a side overall view of a tractor.

### Best mode for carrying out the invention

With reference to the drawings, an embodiment of the present invention will be described below.

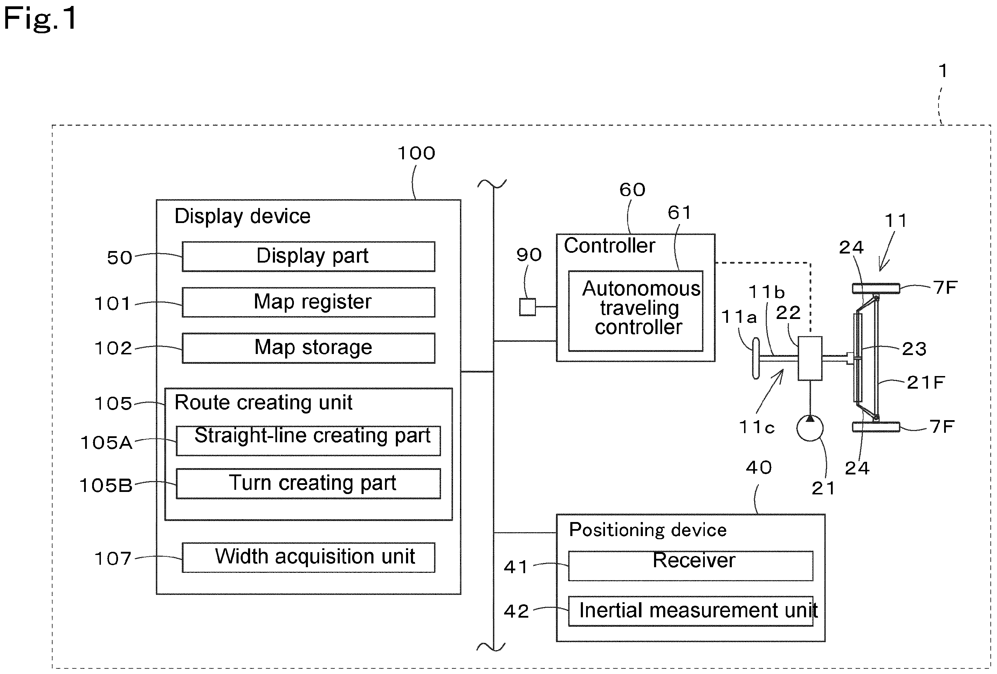

FIG. 1 shows a block diagram of a working machine. In the embodiment, the working machine includes a working vehicle 1 and a towed vehicle 2. The working vehicle 1 is a tractor configured to tow the towed vehicle 2.

The tractor, one of the working vehicles, will be described.

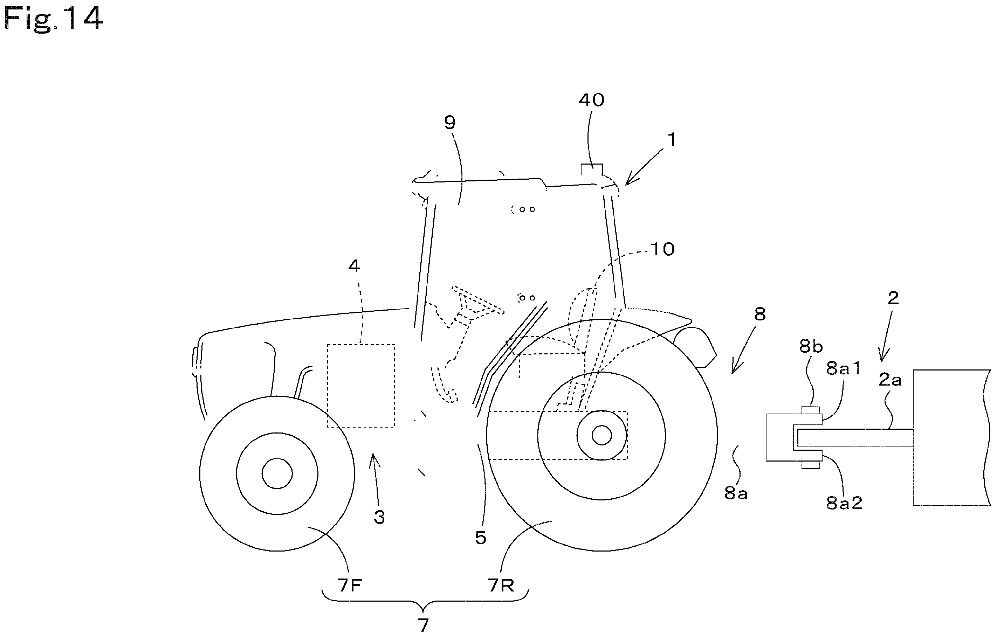

As shown in FIG. 14, the tractor 1 has a traveling vehicle 3 having a traveling device 7, a prime mover 4, and a transmission device 5. The traveling device 7 is a device having front wheels 7F and rear wheels 7R. Each of the front wheels 7F may be of a tire type or crawler type. Each of the rear wheels 7R may also be of the tire type or crawler type. The prime mover 4 is a diesel engine, an electric motor, or the like. The transmission device 5 is configured to switch a propulsion force of the traveling device 7 by shifting gears, and also to switch a traveling direction of the traveling device 7 between forward and backward. A cabin 9 is mounted on the traveling vehicle 3, and a driver seat 10 is provided in the cabin 9.

A connector 8 to be connected to the towed vehicle 2 is provided in a rear portion of the traveling vehicle 3. By connecting the towed vehicle 2 to the connector 8, the traveling vehicle 3 can tow the towed vehicle 2. The towed vehicle 2 is a trailer or the like. The towed vehicle 2 has a connecting bar 2a. The connecting bar 2a is fixed to a frame of the towed vehicle 2 with fasteners such as bolts, and is not able to swing in a width direction. The connecting bar 2a may be fixed to the frame of the towed vehicle 2 by welding. An insertion hole 2c is formed in a front end of the connecting bar 2a.

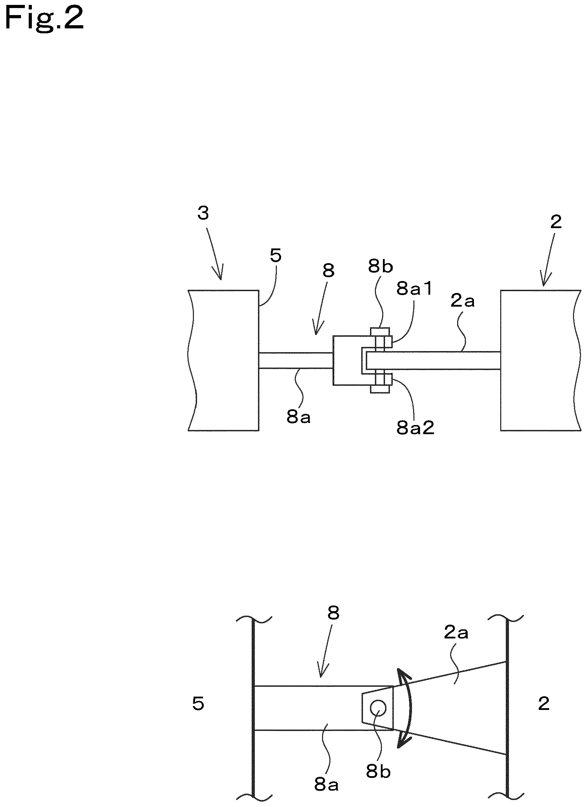

As shown in FIG. 2, the connector 8 is, for example, a towing hitch, and includes an extension member 8a extended rearward from the traveling vehicle 3, and a pivot pin 8b located at a rear end of the extension member 8a. A front portion of the extension member 8a is fixed to a transmission case, a differential case, or the like of the transmission device 5 with fasteners such as bolts, and is not able to swing in a width direction. A rear portion of the extension member 8a has an upper wall 8a1 and a lower wall 8a2 separated from the upper wall 8a1, and the pivot pin 8b penetrates through the upper wall 8a1 and the lower wall 8a2. By positioning the connecting bar 2a of the towed vehicle 2 between the upper wall 8a1 and the lower wall 8a2 and inserting the pivot pin 8b into an insertion hole of the connecting bar 2a, the towed vehicle 2 can be connected to the connector 8.

As shown in FIG. 1, the tractor 1 has a steering device 11. The steering device 11 has a handling wheel (that is, a steering wheel) 11a, a rotation shaft (that is, a steering shaft) 11b that rotates with the rotating of the steering wheel 11a, and an assist mechanism (that is, a power steering mechanism) 11c that assists the steering of the steering wheel 11a. The auxiliary mechanism 11c has a hydraulic pump 21, a control valve 22 to which hydraulic fluid output from the hydraulic pump 21 is supplied, and a steering cylinder 23 to be operated by the control valve 22. The control valve 22 is a solenoid valve configured to be operated according to a control signal. For example, the control valve 22 is a three-position switching valve configured to be switched through movement of a spool or the like. The control valve 22 can also be switched through the steering of the steering shaft 11b. The steering cylinder 23 is connected to an arm (that is, a knuckle arm) 24 that changes orientations of the front wheels 7F.

Thus, when the steering wheel 11a is operated, a switching position and an opening aperture of the control valve 22 are switched according to the operation of the steering wheel 11a, and the steering cylinder 23 is extended and contracted rightward or leftward according to the switching position and the opening aperture of the control valve 22, thereby changing the steering directions of the front wheels 7F. The above-mentioned configuration of the steering device 11 is just an example, and a configuration of the steering device 11 is not limited to the above-mentioned configuration.

The tractor 1 has a positioning device 40. The positioning device 40 is configured to detect its own position (that is, positioning information including latitude and longitude) with satellite positioning systems (that is, positioning satellites) such as D-GPS, GPS, GLONASS, HOKUTO, GALILEO, and MICHIBIKI. That is, the positioning device 40 receives satellite signals (that is, positions of the positioning satellites, transmission times, correction information, and the like) transmitted from the positioning satellites, and detects a position of the tractor 1 (for example, latitude, longitude), that is, detects a vehicle position, based on the satellite signals. The positioning device 40 has a receiver 41 and an inertial measurement unit (IMU) 42. The receiver 41 has an antenna and the like to receive satellite signals transmitted from the positioning satellites, and is attached to the traveling vehicle 3 separately from the inertial measurement unit 42. In the embodiment, the receiver 41 is attached to the traveling vehicle 3, that is, the cabin 9. The attachment location of the receiver 41 is not limited to that of the embodiment.

The inertial measurement unit 42 has an acceleration sensor to detect acceleration, a gyro sensor to detect angular velocity, and the like. The inertial measurement unit 42 is located below the traveling vehicle 3, for example, below the driver seat 10, and can detect a roll angle, a pitch angle, a yaw angle, and the like of the traveling vehicle 3.

As shown in FIG. 1, the tractor 1 has a controller 60. The controller 60 is a device configured to control a traveling system and a work system of the tractor 1.

The controller 60 has an autonomous traveling controller 61 to control autonomous traveling of the tractor 1. The autonomous traveling controller 61 is constituted of electrical and electronic circuits provided in the controller 60, computer programs stored in a CPU, or the like. When autonomous traveling starts, the autonomous traveling controller 61 controls the control valve 22 of the steering device 11 so that the traveling vehicle 3 travels on the scheduled traveling route L1. In addition, when autonomous traveling starts, the autonomous traveling controller 61 controls a vehicle speed (that is, a velocity) of the tractor 1 by automatically gearshifting the transmission device, changing a revolving speed of the prime mover, and the like.

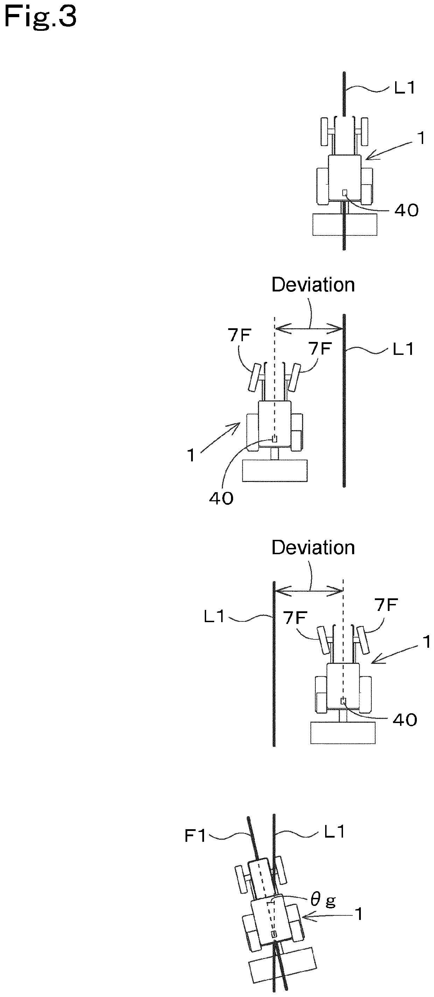

As shown in FIG. 3, when a deviation between a vehicle position and the scheduled traveling route L1 is less than a threshold value in autonomous traveling by the tractor 1, the autonomous traveling controller 61 maintains a rotation angle of the steering shaft (that is, a rotation shaft) 11b. When the deviation between the vehicle position and the scheduled travel route L1 is the threshold value or more and the tractor 1 is located leftward from the scheduled travel route L1, the autonomous traveling controller 61 rotates the steering shaft 11b so that a steering direction of the tractor 1 is orientated to the right. When the deviation between the vehicle position and the scheduled travel route L1 is the threshold value or more and the tractor 1 is located rightward from the scheduled travel route L1, the autonomous traveling controller 61 rotates the steering shaft 11b so that a steering direction of the tractor 1 is orientated to the left. In the above-mentioned embodiment, a steering angle of the steering device 11 is changed based on the deviation between the vehicle position and the scheduled traveling route L1. However, when the direction of the scheduled traveling route L1 differs from a direction (referred to as a vehicle direction) F1 of a movement direction (referred to as a traveling direction) of the tractor 1 (that is, the traveling vehicle 3), that is, when an angle θg of the vehicle direction F1 relative to the scheduled traveling route L1 is a threshold value or more, the autonomous traveling controller 61 may set a steering angle so that the angle θg is zero (that is, the vehicle direction F1 matches a direction of the scheduled traveling route L1). The autonomous traveling controller 61 may also determine a final steering angle in autonomous steering according to a steering angle obtained based on the deviation (that is, a positional deviation) and a steering angle obtained based on the direction (that is, a directional deviation). The setting of the steering angle in autonomous steering in the above-mentioned embodiment is just an example and is not limited thereto.

As described above, the controller 60 is capable of controlling the tractor 1 (that is, the traveling vehicle 3) to autonomously travel.

The tractor 1 has a traveling support device 100. The traveling support device 100 is a display device installed near the driver seat 10. The following description assumes that the traveling support device 100 is a display device.

The display device has a display part 50 constituted of anyone of a liquid crystal panel, a touch panel, or other panels, and is capable of displaying various information relating to the tractor 1, in addition to information for supporting the traveling of the tractor 1.

The display device has a map register 101 and a map storage 102. The map register 101 is constituted of electrical and electronic components mounted in the display device, a computer program installed in the display device, and other components. The map storage 102 is constituted of non-volatile memory, or the like. The map register 101 registers a contour of a predetermined agricultural field, for example, a position corresponding to a contour of a predetermined agricultural field.

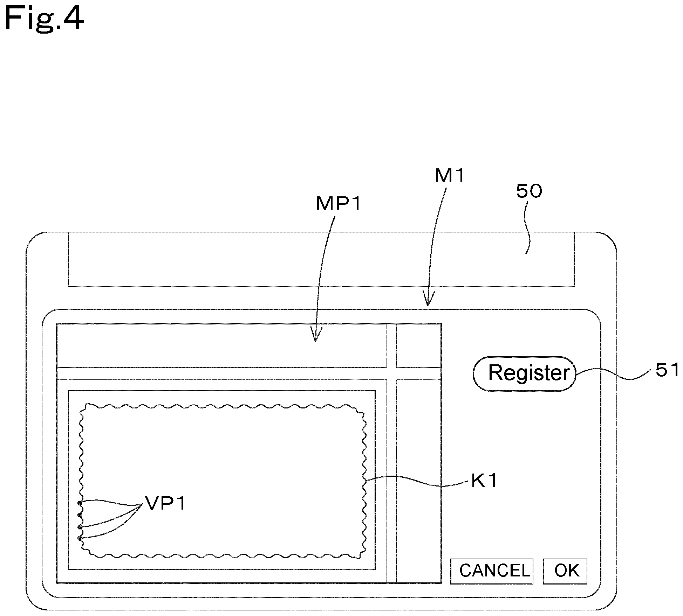

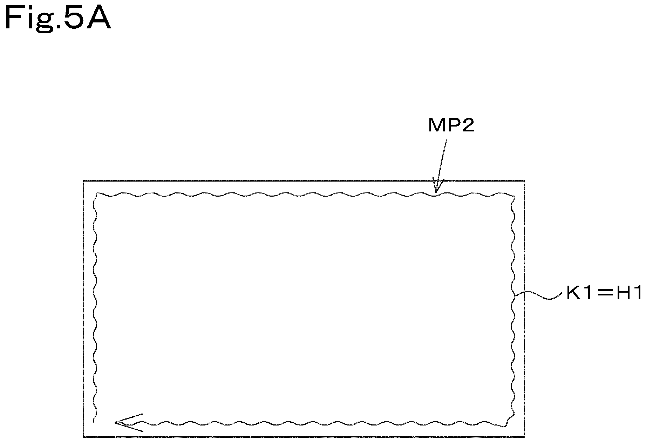

As shown in FIG. 4, when an operator (that is, a driver) performs a predetermined operation on the display device, the map register 101 displays a map register screen M1 on the display part 50 of the display device. In the map register screen M1, a map MP1 including a map of a field, a vehicle position VP1 of the tractor 1, and field identification information such as a field name and a field management number are displayed. In addition to the image data showing the field, position information such as latitude and longitude is associated with the map MP1. When the tractor 1 enters the field and travels around in the field, the map register screen M1 displays the current vehicle position VP1 that is detected by the positioning device 40 during the traveling of the tractor 1 in the field. When the tractor 1 stops traveling around in the field and a registration button 51 displayed on the map register screen M1 is selected, the map register 101 employs, as a contour (that is, an outline) H1 of field, a traveling locus K1 obtained based on a plurality of vehicle positions obtained during the traveling of the tractor 1 as shown in FIG. 5A, and registers the field map MP2 represented by the contour H1 together with the field identification information.

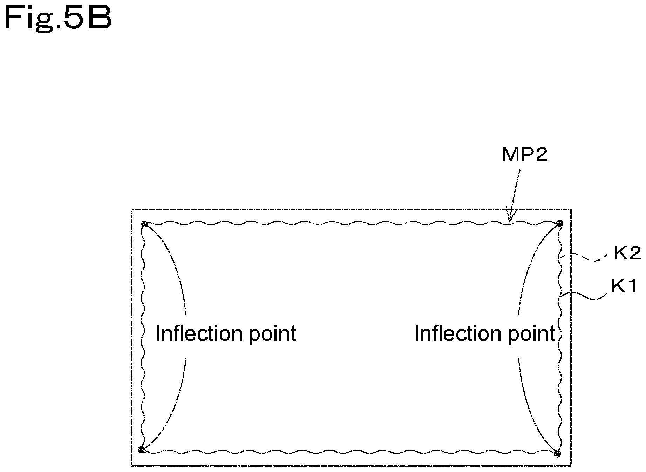

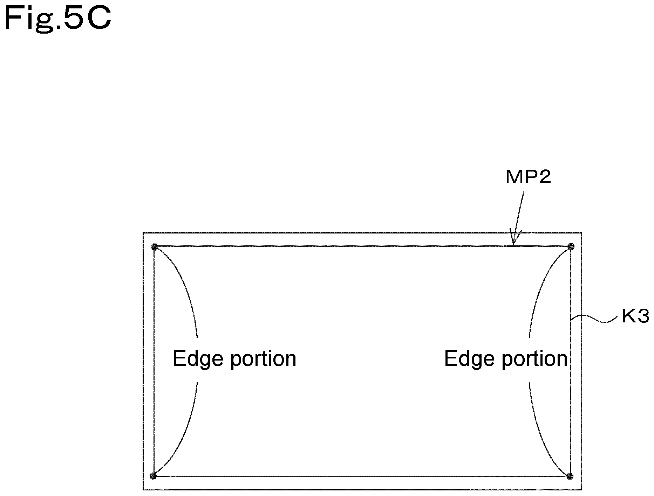

As shown in FIG. 5B, the map register 101 may calculate inflection points based on the traveling locus represented by the vehicle position VP1 and register a contour K2 connecting the inflection points to one another as the contour H1 of field (that is, the field map MP2). As shown in FIG. 5C, a driver or another person may select edge portions of the field with use of a switch or the like provided on the tractor 1 traveling around, and the contour K3 connecting the selected edge portions to one another may be registered as the contour H1 (that is, the field map MP2). The above-mentioned method of registering a field is just an example and is not limited thereto. The contour of field, that is, the field map MP2, may be data indicated in positions (that is, latitude and longitude), data indicated in a coordinate system (that is, X-axis and Y-axis), or data in other expressions.

The map storage 102 stores the field map MP2 showing a contour (that is, an outline) registered by the map register 101. That is, the map storage 102 stores the field map MP2, i.e., data indicating the contour of field (that is, data for representing a predetermined field).

The display device (that is, the traveling support device 100) is configured to create, for a predetermined field, the scheduled traveling route L1 to be used in autonomously traveling the tractor 1. The traveling support device 100 has a route creating unit 105 to create the scheduled traveling route L1 and a width acquisition unit 107. The route creating unit 105 and the width acquisition unit 107 are constituted of electrical and electronic circuits provided in the display device, computer programs stored in the display device, or the like.

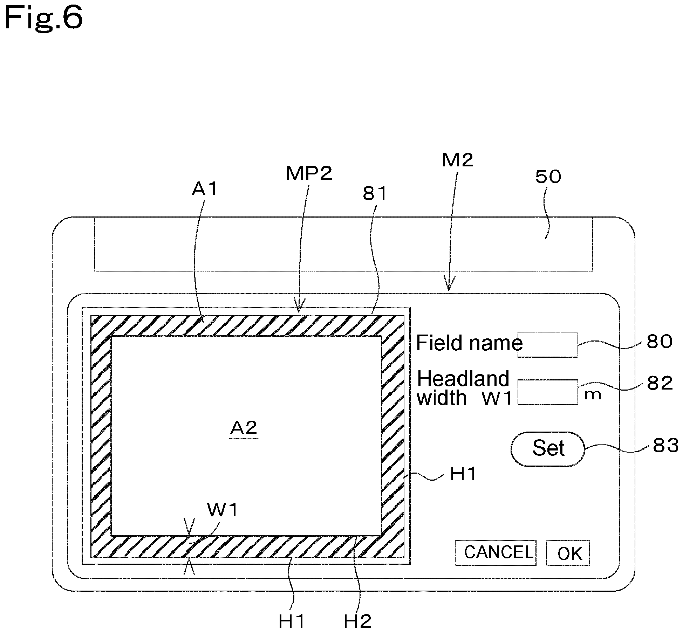

As shown in FIG. 6, when an operator (that is, a driver) performs a predetermined operation on the display device, the route creating unit 105 displays the work setting screen M2. The work setting screen M2 has a field input portion 80 and a field display portion 81. The field input portion 80 allows input of field identification information such as a field name, a management number of field, and the like. The field display portion 81 displays the field map MP2 showing a predetermined field corresponding to the field identification information input in the field input portion 80. That is, the route creating unit 105 requests, from the map storage 102, the field map MP2 corresponding to the field identification information input to the field input portion 80, and displays, on the field display portion 81, the field map MP2 transmitted from the map storage 102.

In the work setting screen M2, when a headland width W1 is input in the headland width input portion 82 and the headland setting button 83 is selected, the route creating unit 105 displays a work area A2, excluding a headland area A1, in the field map MP2 displayed in the field display portion 81. For example, the route creating unit 105 sets an area surrounded by a contour H2, which is formed by offsetting the contour H1 of the field map MP2 inward by the headland width W1, as the work area A2. In the work setting screen M2, the work area A2 may be set in the field map MP2 by designating, with a pointer or the like, a position of an outline of the work area A2 on the field map MP2 displayed in the field display portion 81.

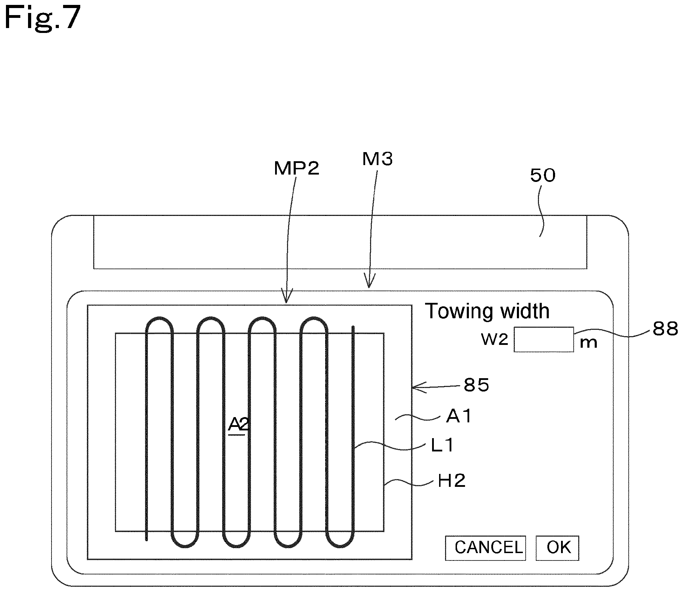

As shown in FIG. 7, when the setting of the work area A2 is completed, the route creating unit 105 switches display of the display device (that is, the traveling support device 100) from the work setting screen M2 to a route setting screen M3. In the route setting screen M3, it is possible to set the scheduled traveling route L1 in an area including the work area A2 in a field. The route setting screen M3 has a route display portion 85 that displays the scheduled travel route L1 and a width input portion 88. The width acquisition unit 107 acquires a towing width W2 input to the width input portion 88. The towing width W2 of the towed vehicle 2 is a width of the towed vehicle 2.

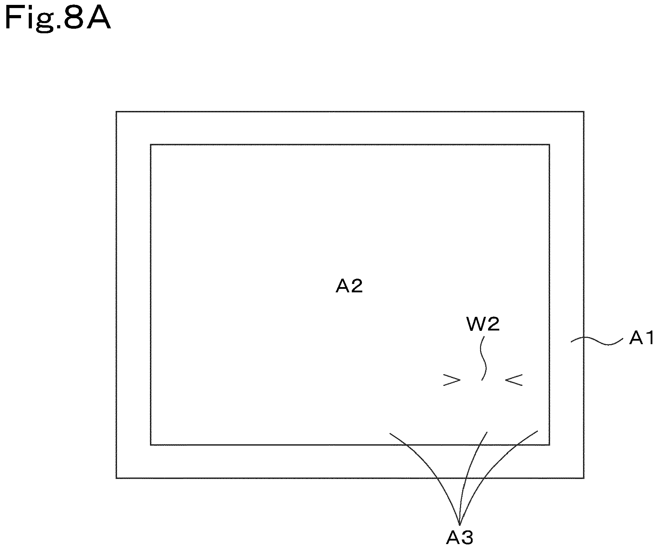

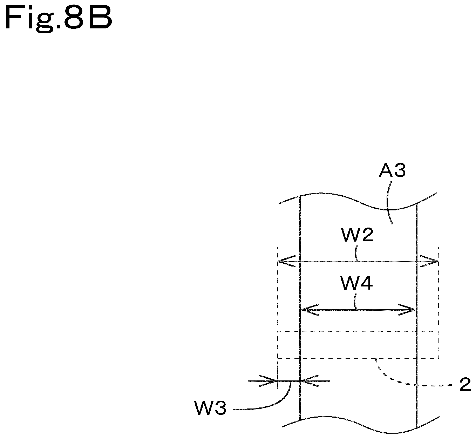

When the width acquisition unit 107 acquires the towing width W2, the route creating unit 105 creates, in the work area A2, a plurality of unit work sections A3 in which the towed vehicle 2 works by dividing the work area A2 vertically or horizontally by the towing width W2, as shown in FIG. 8A. That is, the route creating unit 105 creates a plurality of unit work sections A3 of the same width as the towing width W2 in the work area A2. As shown in FIG. 8B, the route creating unit 105 may create a plurality of unit work sections A3 each having a width W4, which is a width obtained by eliminating an overlap width W3 from the towing width W2, in the work area A2. The overlap width W3 can be input in the route setting screen M3. That is, the route creating unit 105 sets, as the unit work area A3, the minimum unit area in which a work is performed on the field by the towed vehicle 2 when the traveling vehicle 3 connected to the towed vehicle 2 travels.

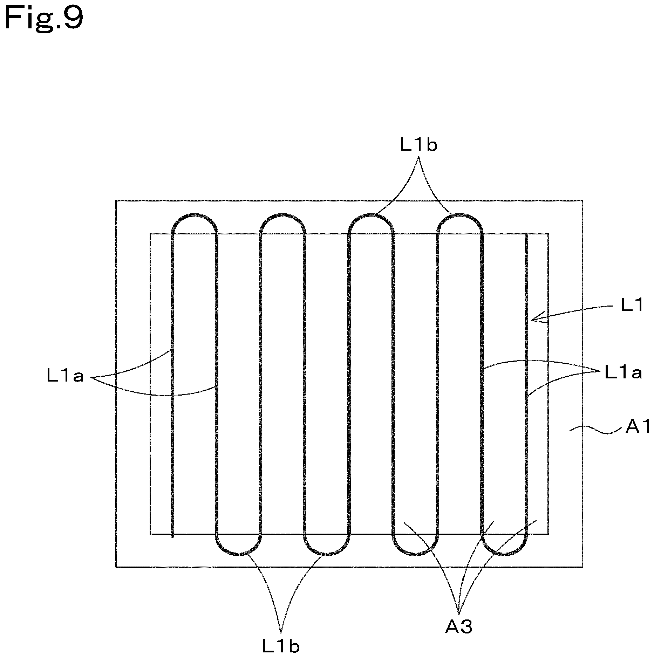

The route creating unit 105 includes a straight-line creating part 105A and a turn creating part 105B. As shown in FIG. 9, the straight-line creating part 105A creates, for each unit work section A3 in the work area A2, a straight-line portion (that is, a straight-line route) L1a configured to make the traveling vehicle 3 moving thereon travel straight. That is, the straight-line creating part 105A creates, for example, a straight-line portion L1a at a width directional center of the unit work section A3, the straight-line portion L1a connecting both longitudinal directional ends of the unit work section A3 to each other. In addition, the turn creating part 105B creates a turn portion (that is, a turn route) L1b by connecting adjoining straight-line portions L1a to each other, the turn portion L1b being configured to make the traveling vehicle 3 moving thereon turn.

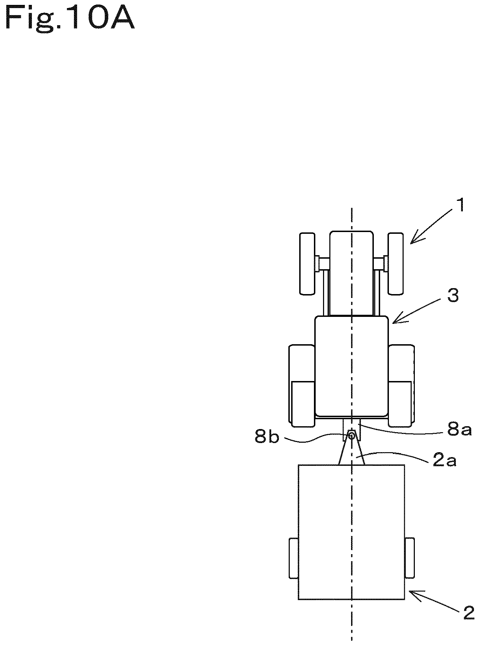

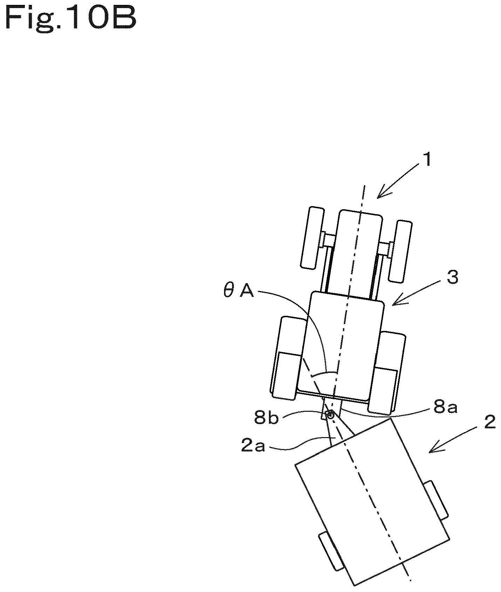

The autonomous traveling controller 61 controls autonomous traveling based on a relative angle θA formed between the connector 8 of the traveling vehicle 3 and the towed vehicle 2 connected to the connector 8. The working machine has an angle detector 90 configured to detect the relative angle θA with light, magnetism, or the like. The angle detector 90 has a magnet (or magnets) attached to a swingable portion (that is, a front end of the connecting bar 2a of the towed vehicle 2) and a magnetic sensor attached to a stationary portion (that is, the upper wall 8a1 or lower wall 8a2 of the extension 8a). In the angle detector 90, the relative angle θA is detected by sensing a change in magnetic field of the magnet with the magnetic sensor. As shown in FIG. 10A, when the connecting bar 2a and the extension member 8a are aligned in a straight line in a fore-and-aft direction, the angle detector 90 detects that the relative angle θA is zero. As shown in FIG. 10B, when the extension member 8a crosses (bends) with respect to the connecting bar 2a, the angle detector 90 detects the relative angle θA according to a crossing degree. The above-mentioned angle detector 90 is just an example and is not limited thereto, and may be constituted of an infrared sensor, a rotary encoder, a device to capture an image and detects an angle from the captured image, a device to detect an angle based on extending and contracting of a cylinder or the like, or any other configuration.

The automatic traveling controller 61 determines at least one of the steering angle and the steering direction based on the relative angle θA. For example, in a state where autonomous traveling is being performed on the straight-line portion L1a and the turn portion L1b, when the relative angle θA is larger than a predetermined judgment value and a distance between the traveling vehicle 3 and the towed vehicle 2 defined by the connector 8 is short, the autonomous traveling controller 61 reduces the relative angle θA by setting a steering angle of the steering device 11 to be smaller than the current steering angle, and reduces the relative angle θA by changing a steering direction to a direction in which the traveling vehicle 3 and the towed vehicle 2 are separated further away from each other.

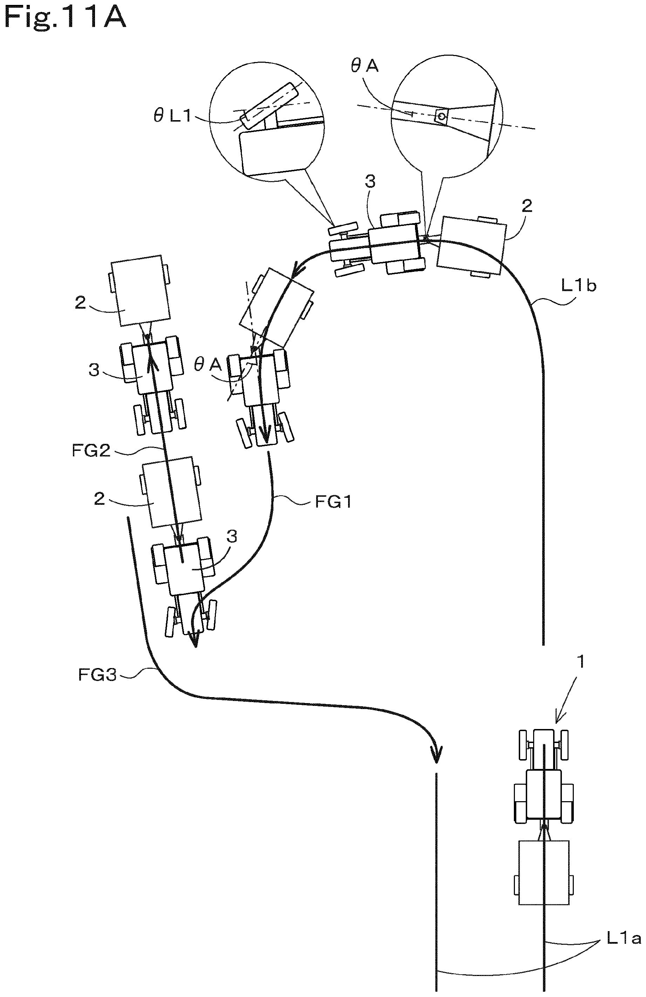

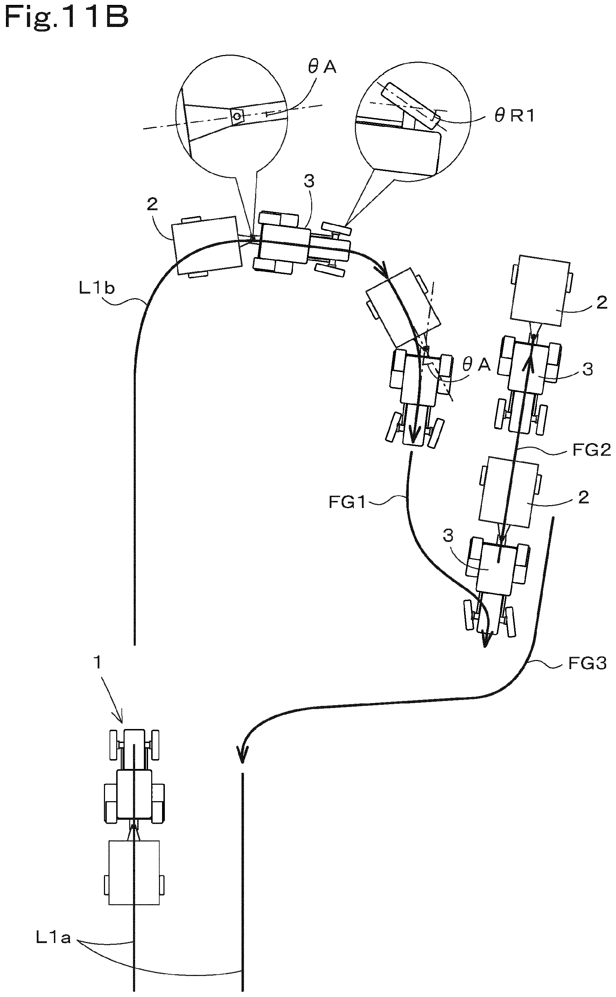

FIGS. 11A and 11B show a state where the traveling vehicle 3 and the towed vehicle 2 are turning in the headland area A1.

As shown in FIGS. 11A and 11B, the autonomous traveling controller 61 monitors the relative angle θA when the traveling vehicle 3 turns while traveling forward on the turn area L1b. When the relative angle θA detected by the angle detector 90 is less than a turn judgment value θT, the autonomous traveling controller 61 determines steering angles θL1 and θR1 based on the turn portion L1b and the vehicle position to execute a turn control so that the vehicle position of the traveling vehicle 3 matches the turn portion L1b. That is, when the relative angle θA is less than the turn judgment value θT, the autonomous traveling controller 61 continues the turn control in which the turning is performed according to the steering angles θL1 and θR1 determined based on the turn portion L1b and the vehicle position.

On the other hand, in a state when the traveling vehicle 3 turns while traveling forward on the turn portion L1b, the autonomous traveling controller 61 stops the turn control when the relative angle θA is the turn judgment value θT or more. In a state where the steering device 11 turns the traveling vehicle 3 to the right, the autonomous traveling controller 61 also stops the turn control when the relative angle θA is the turn judgment value θT or more.

When the autonomous traveling controller 61 stops the turn control, the control shifts to a multi-point turn control. In the multi-point turn control, the traveling vehicle 3 switchbacks the steering in multi-point by changing the steering angles θL1 and θR1 so that the traveling vehicle 3 can enter on the straight-line portion L1a continuously connecting to the turn portion L1b.

As shown in FIG. 11A, in a state where the steering device 11 turns the traveling vehicle 3 to the left, the autonomous traveling controller 61 shifts from the turn control to the multi-point turn control when the relative angle θA is the turn judgment value θT or more at a point P60. In the multi-point turn control, the steering direction is changed from the left to the right by the steering device 11 as shown by a switchback FG1, and the traveling vehicle 3 travels forward. In the switchback FG1, the forward-traveling is performed with the steering direction changed from the left to the right, and thus the relative angle θA gradually decreases. When the traveling vehicle 3 and the towed vehicle 2 are in a straight line, that is, when the relative angle θA becomes zero, the steering angle θL1 of the steering device 11 is set to be substantially zero, and the traveling vehicle 3 travels backward, as shown in a switchback FG2. In the switchback FG2, the traveling vehicle 3 and the towed vehicle 2 will move in the same direction without being bent.

After the traveling vehicle 3 and the towed vehicle 2 travel backward in an integral manner, the traveling vehicle 3 travels forward as shown by a switchback FG3, and then the traveling vehicle 3 enters the straight-line portion L1a. When the traveling vehicle 3 enters the straight-line portion L1a, the autonomous traveling controller 61 terminates the multi-point turn control and shifts to a straight-traveling control.

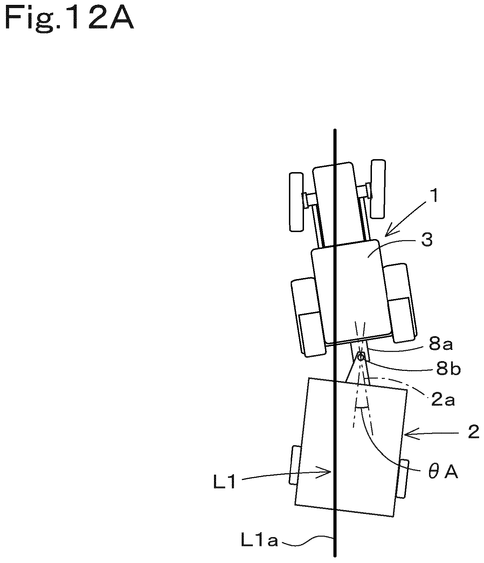

In the straight-traveling control, the autonomous traveling controller 61 sets a steering angle of the steering device 11 so that the traveling vehicle 3 and the towed vehicle 2 are positioned on the straight-line portion L1a, that is, so that the traveling vehicle 3 and the towed vehicle 2 travels straight while the relative angle θA is maintained at zero. As shown in FIG. 12A, when the pivot pin 8b is positioned on one side (rightward) relative to the straight-line portion L1a and the traveling vehicle 3 and towed vehicle 2 are orientated oblique each other in an inverted L-shape, the straight-traveling control sets the steering direction of the traveling vehicle 3 to the one side (rightward) to decrease the relative angle θA so that the traveling vehicle 3 and the towed vehicle 2 are steered to travel on the straight-line portion L1a.

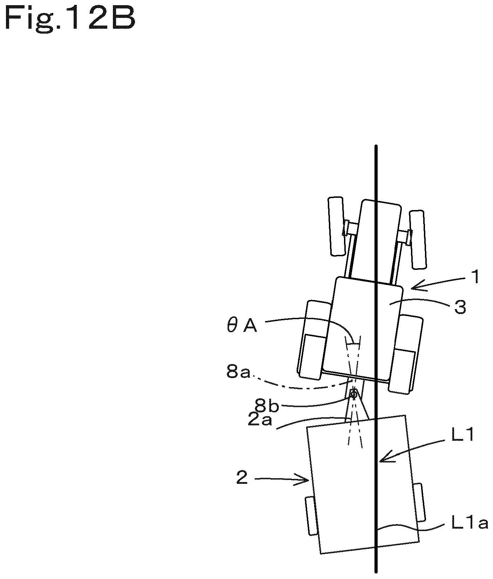

As shown in FIG. 12B, when the pivot pin 8b is positioned on the other side (leftward) relative to the straight-line portion L1a and the traveling vehicle 3 and towed vehicle 2 are orientated oblique each other in an L-shape, the straight-traveling control sets the steering direction of the traveling vehicle 3 to the other side (leftward) to decrease the relative angle θA so that the traveling vehicle 3 and the towed vehicle 2 are steered to travel on the straight-line portion L1a. As shown in FIGS. 12A and 12B, when the traveling vehicle 3 and the towed vehicle 2 are orientated oblique each other in an inverted L-shape in the straight-traveling control, a steering angle of the steering device 11 may be set based on a magnitude of the relative angle θA or based on a deviation between the straight-line portion L1a and the vehicle position.

Thus, since a steering angle and steering direction are controlled based on the relative angle θA, a traveling straightness of the vehicle on the straight-line portion L1a can be improved.

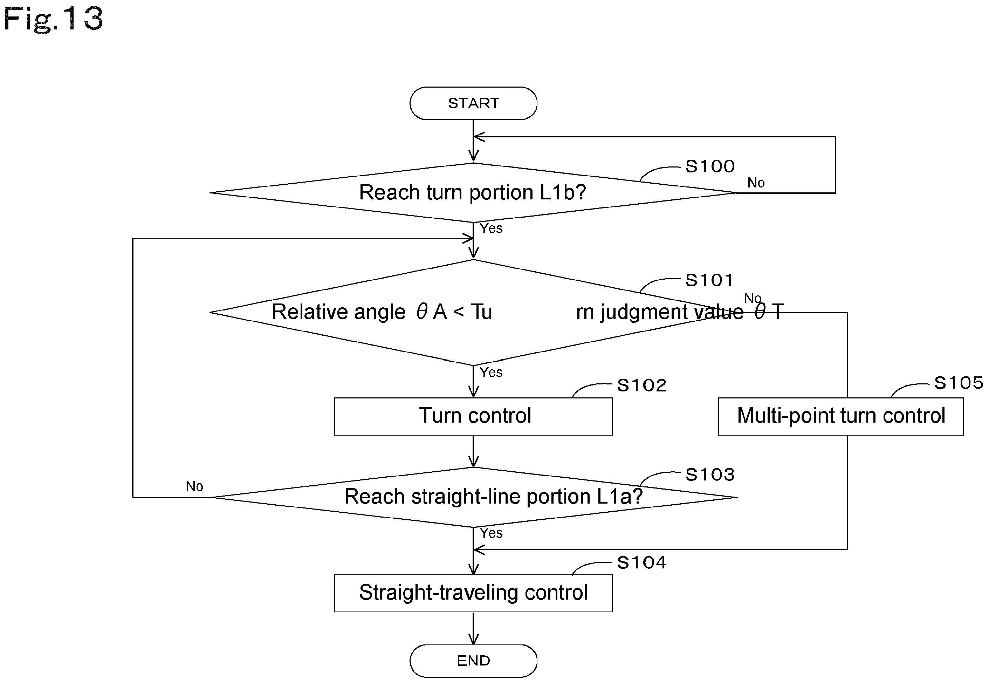

FIG. 13 is a view showing autonomous traveling in the autonomous traveling controller 61. As shown in FIG. 13, in performing autonomous traveling, the autonomous traveling controller 61 judges whether a vehicle position of the traveling vehicle 3 has reached the turn portion L1b from the straight-line portion L1a (S100). When the vehicle position of the traveling vehicle 3 has reached the turn portion L1b (S100, Yes), the autonomous traveling controller 61 judges whether the relative angle θA is less than the turn judgment value θT (S101). When the relative angle θA is less than the turn judgment value θT (S101, Yes), the autonomous traveling controller 61 executes the turn control (S102). It is judged whether or not the vehicle position of the traveling vehicle 3 has reached the straight-line portion L1a from the turn portion L1b (S103). When the vehicle position of the traveling vehicle 3 has not reached the straight-line portion L1a from the turn portion L1b (S103, Yes), the autonomous traveling controller 61 shifts to straight-traveling control (S104). When the relative angle θA is the turn judgment value θT or more (S101, No), the autonomous traveling controller 61 stops the turn control and shifts to the multi-point turn control (S105), and when the multi-point turn control ends, the autonomous traveling controller 61 shits to the straight-traveling control (S104). The autonomous traveling controller 61 controls the steering angle and steering direction so that the traveling vehicle 3 and the towed vehicle 2 positionally match the straight-line portion L1a and the relative angle θA is zero in the straight-traveling control.

According to the working vehicle and the working machine described above, since the autonomous traveling is controlled based on the relative angle θA between the traveling vehicle 3 and the towed vehicle 2, the autonomous traveling can be easily performed even when the traveling vehicle 3 and the towed vehicle 2 connected to the traveling vehicle 3 are autonomously traveling on the scheduled traveling route L1. For example, contact between the traveling vehicle 3 and the towed vehicle 2 (that is, vehicle contact) or jackknife phenomenon can be prevented by knowing the relative angle θA during autonomous traveling and controlling at least one of the steering angle and steering direction according to the relative angle θA.

When the traveling vehicle 3 is traveling on the straight-line portion L1a, the traveling vehicle 3 and the towed vehicle 2 can travel so that the positions of both the traveling vehicle 3 and the towed vehicle 2 match the straight-line portion L1a, thereby improving the traveling straightness.

In addition, when the traveling vehicle 3 turns left or right on the turn portion L1b, the vehicle contact and the jackknife phenomena can be prevented. In addition, when the relative angle θA between the traveling vehicle 3 and the towed vehicle 2 is large and the turning is difficult, the control can automatically shift from the turn control to the multi-point turn control, and thus the traveling vehicle 3 can return smoothly to the straight-line portion L1a through the turning in multi-point.

### Description of reference numerals

- 1: Working vehicle (Tractor)
- 2: Towed vehicle
- 3: Traveling vehicle
- 61: Autonomous traveling controller
- 90: Angle detector
- L1: Scheduled traveling route
- L1a: Straight-line portion
- L1b: Turn portion

## Claims

1. A working vehicle comprising:
- a traveling vehicle (3) having a connector (8) configured to connect a towed vehicle (2) to the traveling vehicle (3), the traveling vehicle (3) being configured to travel on a scheduled traveling route (L1);
- an angle detector (90), which, when a towed vehicle (2) is connected to the connector (8), is configured to detect a relative angle (θA) between the connector (8) and the towed vehicle (2) connected to the connector (8) ;
- a positioning device (40) configured to detect a vehicle position which is a position of the traveling vehicle (3); and
- an autonomous traveling controller (61) configured to control autonomous traveling of the traveling vehicle (3) based on the relative angle (θA), the scheduled traveling route (L1), and the vehicle position, wherein,
the autonomous traveling controller (61) is configured to control steering of the traveling vehicle (3) so that the vehicle position matches the scheduled traveling route (L1), and
to determine at least one of a steering angle (θL1, θR1) and a steering direction of the traveling vehicle (3) based on the relative angle (θA), **characterized in that**
when a towed vehicle (2) is connected to the connector (8) and when the scheduled traveling route (L1) includes a turn portion (L1b) configured to make the traveling vehicle (3) moving thereon turn, and the relative angle (θA) is less than a turn judgment value (θT), the autonomous traveling controller (61) is configured to execute a turn control to determine the steering angle (θL1, θR1) and the steering direction so that the vehicle position matches the turn portion (L1b), and, in the turn control, when the relative angle (θA) becomes the turn judgment value (θT) or more, the autonomous traveling controller (61) is configured to stop the turn control.

2. The working vehicle according to claim 1, wherein
- after the stopping of the turn control, when the scheduled traveling route (L1) includes a straight-line portion (L1a) continuously connecting to the turn portion (L1b), the straight-line portion (L1a) being configured to make the traveling vehicle (3) moving thereon travel straight, the autonomous traveling controller (61) is configured to shift to a multi-point turn control to turn the traveling vehicle (3) in multi-point by changing either the steering angle (θL1, θR1) or the steering direction so that the traveling vehicle (3) enters the straight-line portion (L1a).

3. The working vehicle according to claim 2, wherein
- after the turn control or the multi-point turn control, the autonomous traveling controller (61) is configured to determine the steering angle (θL1, θR1) and the steering direction so that the towed vehicle (2) is positioned on the straight-line portion (L1a).

4. A working machine comprising:
- a working vehicle (1) according to any one of claims 1 to 3; and
- a towed vehicle (2) connected to the working vehicle (1).

## Patentansprüche

1. Arbeitsfahrzeug, umfassend:
- ein fahrendes Fahrzeug (3) mit einem Verbinder (8), der eingerichtet ist, ein gezogenes Fahrzeug (2) mit dem fahrenden Fahrzeug (3) zu verbinden, wobei das fahrende Fahrzeug (3) eingerichtet ist, auf einer geplanten Fahrtroute (L1) zu fahren;
- einen Winkeldetektor (90), der, wenn ein gezogenes Fahrzeug (2) mit dem Verbinder (8) verbunden ist, eingerichtet ist, einen relativen Winkel (θA) zwischen dem Verbinder (8) und dem gezogenen Fahrzeug (2), das mit dem Verbinder (8) verbunden ist, zu erfassen;
- eine Positionierungsvorrichtung (40), die eingerichtet ist, eine Fahrzeugposition zu erfassen, die eine Position des fahrenden Fahrzeugs (3) ist; und
- eine autonome Fahrtsteuerung (61), die eingerichtet ist, ein autonomes Fahren des fahrenden Fahrzeugs (3) basierend auf dem relativen Winkel (θA), der geplanten Fahrtroute (L1) und der Fahrzeugposition zu steuern, wobei
die autonome Fahrtsteuerung (61)
eingerichtet ist, ein Lenken des fahrenden Fahrzeugs (3) zu steuern, so dass die Fahrzeugposition mit der geplanten Fahrtroute (L1) übereinstimmt, und
wenigstens eines von einem Lenkwinkel (θL1, θR1) und einer Lenkrichtung des fahrenden Fahrzeugs (3) basierend auf dem relativen Winkel (θA) zu bestimmen, **dadurch gekennzeichnet, dass**
wenn ein gezogenes Fahrzeug (2) mit dem Verbinder (8) verbunden ist und wenn die geplante Fahrtroute (L1) einen Wendeabschnitt (L1b) enthält, der eingerichtet ist, das fahrende Fahrzeug (3), das sich darauf bewegt, zum Wenden zu bringen, und der relative Winkel (θA) kleiner als ein Wendebeurteilungswert (θT) ist, die autonome Fahrtsteuerung (61) eingerichtet ist, eine Wendesteuerung auszuführen, um den Lenkwinkel (θL1, θR1) und die Lenkrichtung zu bestimmen, so dass die Fahrzeugposition mit dem Wendeabschnitt (L1b) übereinstimmt, und in der Wendesteuerung, wenn der relative Winkel (θA) der Wendebeurteilungswert (θT) oder mehr wird, die autonome Fahrtsteuerung (61) eingerichtet ist, die Wendesteuerung zu stoppen.

2. Arbeitsfahrzeug nach Anspruch 1, wobei
- nach dem Stoppen der Wendesteuerung, wenn die geplante Fahrtroute (L1) einen geradlinigen Abschnitt (L1a) enthält, der kontinuierlich mit dem Wendeabschnitt (L1b) verbunden ist, wobei der geradlinige Abschnitt (L1a) eingerichtet ist, das fahrende Fahrzeug (3), das sich darauf bewegt, zum Geradeausfahren zu bringen, die autonome Fahrtsteuerung (61) eingerichtet ist, zu einer Mehrpunkt-Wendesteuerung zu wechseln, um das fahrende Fahrzeug (3) Mehrpunkt zu wenden, indem entweder der Lenkwinkel (θL1, θR1) oder die Lenkrichtung geändert wird, so dass das fahrende Fahrzeug (3) in den geradlinigen Abschnitt (L1a) eintritt.

3. Arbeitsfahrzeug nach Anspruch 2, wobei
- nach der Wendesteuerung oder der Mehrpunkt-Wendesteuerung die autonome Fahrtsteuerung (61) eingerichtet ist, den Lenkwinkel (θL1, θR1) und die Lenkrichtung zu bestimmen, so dass das gezogene Fahrzeug (2) auf dem geradlinigen Abschnitt (L1a) positioniert ist.

4. Arbeitsmaschine, umfassend:
- ein Arbeitsfahrzeug (1) nach einem der Ansprüche 1 bis 3; und
- ein gezogenes Fahrzeug (2), das mit dem Arbeitsfahrzeug (1) verbunden ist.

## Revendications

1. Véhicule de travail comprenant :
- un véhicule de déplacement (3) ayant un connecteur (8) configuré pour connecter un véhicule remorqué (2) au véhicule de déplacement (3), le véhicule de déplacement (3) étant configuré pour se déplacer sur un itinéraire de déplacement planifié (L1) ;
- un détecteur d'angle (90) qui, lorsqu'un véhicule remorqué (2) est connecté au connecteur (8), est configuré pour détecter un angle relatif (θA) entre le connecteur (8) et le véhicule remorqué (2) connecté au connecteur (8) ;
- un dispositif de positionnement (40) configuré pour détecter une position de véhicule qui est une position du véhicule de déplacement (3) ; et
- un dispositif de commande de déplacement autonome (61) configuré pour commander un déplacement autonome du véhicule de déplacement (3) sur la base de l'angle relatif (θA), de l'itinéraire de déplacement planifié (L1) et de la position de véhicule, dans lequel
le dispositif de commande de déplacement autonome (61)
est configuré pour commander la direction du véhicule de déplacement (3) de sorte que la position de véhicule corresponde à l'itinéraire de déplacement planifié (L1), et
pour déterminer au moins l'un d'un angle de braquage (θL1, θR1) et d'une direction de braquage du véhicule de déplacement (3) sur la base de l'angle relatif (θA), **caractérisé en ce que**
lorsqu'un véhicule remorqué (2) est connecté au connecteur (8) et lorsque l'itinéraire de déplacement planifié (L1) inclut une partie de virage (L1b) configurée pour amener le véhicule de déplacement (3) se déplaçant sur celle-ci à tourner, et que l'angle relatif (θA) est inférieur à une valeur de jugement de virage (θT), le dispositif de commande de déplacement autonome (61) est configuré pour exécuter une commande de virage pour déterminer l'angle de braquage (θL1, θR1) et la direction de braquage de sorte que la position de véhicule corresponde à la partie de virage (L1b), et, dans la commande de virage, lorsque l'angle relatif (θA) devient la valeur de jugement de virage (θT) ou plus, le dispositif de commande de déplacement autonome (61) est configuré pour arrêter la commande de virage.

2. Véhicule de travail selon la revendication 1, dans lequel
- après l'arrêt de la commande de virage, lorsque l'itinéraire de déplacement planifié (L1) inclut une partie de ligne droite (L1a) se connectant en continu à la partie de virage (L1b), la partie de ligne droite (L1a) étant configurée pour amener le véhicule de déplacement (3) se déplaçant sur celle-ci à se déplacer en ligne droite, le dispositif de commande de déplacement autonome (61) est configuré pour passer à une commande de virage multipoint pour tourner le véhicule de déplacement (3) en multipoint en changeant soit l'angle de braquage (θL1, θR1) soit la direction de braquage de sorte que le véhicule de déplacement (3) entre dans la partie de ligne droite (L1a).

3. Véhicule de travail selon la revendication 2, dans lequel
- après la commande de virage ou la commande de virage multipoint, le dispositif de commande de déplacement autonome (61) est configuré pour déterminer l'angle de braquage (θL1, θR1) et la direction de braquage de sorte que le véhicule remorqué (2) est positionné sur la partie de ligne droite (L1a).

4. Machine de travail comprenant :
- un véhicule de travail (1) selon l'une quelconque des revendications 1 à 3 ; et
- un véhicule remorqué (2) relié au véhicule de travail (1).
